(19) Europäisches Patentamt / European Patent Office / Office européen des brevets

(11) **EP 2 171 243 B1**

(12) **EUROPEAN PATENT SPECIFICATION**

(45) Date of publication and mention
of the grant of the patent:
**11.09.2013 Bulletin 2013/37**

(21) Application number: **07825412.5**

(22) Date of filing: **19.07.2007**

(51) Int Cl.:
**B60R 16/023** (2006.01)  **G10K 11/175** (2006.01)

(86) International application number:
**PCT/IB2007/003112**

(87) International publication number:
**WO 2009/010817 (22.01.2009 Gazette 2009/04)**

(54) **METHOD AND SYSTEM FOR LIMITING VEHICLE NOISES**

VERFAHREN UND SYSTEM ZUR BESCHRÄNKUNG VON FAHRZEUGGERÄUSCHEN

PROCÉDÉ ET SYSTÈME POUR LIMITER DES BRUITS DE VÉHICULE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**07.04.2010 Bulletin 2010/14**

(73) Proprietor: **Renault Trucks
69800 Saint Priest (FR)**

(72) Inventor: **FAVRE, Bernard
F-69008 Lyon (FR)**

(74) Representative: **Putet, Gilles et al
RENAULT TRUCKS
VTEC France - Corporate Patents
TER E70 2 12
99, route de Lyon
69806 Saint Priest Cedex (FR)**

(56) References cited:
**EP-A- 1 225 318    EP-A- 1 277 925
WO-A- 01/08928    WO-A- 02/48529
US-A- 5 204 971**

# Description

## Technical field

The invention relates to the field of automotive vehicles, and especially to the field of automotive road vehicles for passenger or goods transport.

## Background art

The importance of automotive vehicles, and especially of automotive road vehicles, in modern societies needs not to be demonstrated. Nevertheless, it is more and more apparent that, due to their ever increasing number and importance, concerns have grown with respect to their acceptability for the same modern societies. Environmental concerns are indeed a big issue, but more and more it appears that, especially in urban areas, the noise generated and emitted to the exterior by the automotive vehicles is also something which should be dealt with to improve vehicle acceptability by road near-by residents.

Up to date, to prepare future vehicle and traffic low noise solutions, at least three types of technical actions are being developed:

- Passive reduction of vehicle noise which comprise the reduction of radiating performance of vehicle noise sources through passive acoustic measures (absorption, insulation, diffraction...) by adding material or modifying the vehicle functions (screens, encapsulation, silencers etc...);
- Active action on vehicle noise sources in order to reduce their capacity to emit noise, by use of trigger signals or commands to control noise source performance;
- Active cancellation of noise (by emitting a counteracting noise signal).

One example of an active action on vehicle noise sources is, in the case of internal combustion engine powered vehicles, to maintain the engine speed and load below certain predefined level, so that overall vehicle noise is reduced, at least for certain vehicle operation modes, thereby acting on the vehicle's emission of high mechanical noise level which occurs at high engine speed/load.

Basically, the overall vehicle noise emitted by a vehicle comes from a combination of many noise sources. For example, for a road vehicle such as a car or a truck, the vehicle noise is the combination of various noises which can be classified into various main categories:

- the rolling noise comprises the noises due to sources linked to vehicle rolling base such as the propeller shaft, axle, tires and tire/road contact, etc... For a given vehicle, the rolling noise level varies essentially with vehicle speed and road surface (roughness, impedance, noise absorption characteristics...)
- the aerodynamic noise due to vehicle/airflow interaction, mostly under relatively high speed condition, and
- the mechanical noise which comprises most other noises emitted by a vehicle, especially the noises due to sources linked to vehicle propulsion: the engine block, the gearbox, the fan, intake, exhaust (pipe, silencer and exhaust mouth), accessories, etc... For a given vehicle, the mechanical noise level varies essentially with engine speed and load. Other noises which can be included in this category come from sources such as vehicle brakes, pneumatic systems and other accessories such as ventilating, refrigerating and heating units, auxiliary motors and engines, etc...

Basically, at low vehicle speeds, mechanical noise is preponderant over the other vehicle noise categories. At intermediate speeds and high, rolling noise is usually preponderant, aerodynamic noise being only important at highest vehicle speeds.

Studies have demonstrated that the perception and the acceptability of a noise are based on a complex combination of factors, involving intensity of the noise and the quality of noise, which comprises its frequency contents and its time structure. It is possible to improve the perception by working on noise signal content. For a given speed, rolling noise varies widely with different road surfaces (typically within 10 to 15 dB(A), depending of surfaces). Conversely, rolling noise varies with vehicle speed for a given road surface. Typically doubling of the vehicle speed corresponds to an increase of 12 dB(A) of the rolling noise. Nevertheless, the rolling noise generally has wider bandwidth than the mechanical noise, and varies more continuously, with less tonal variations, less pure frequency spectrum contents, and less time dependant variations, which all in all makes it more acceptable.

As stated above, a method to limit the overall noise emitted by a vehicle is to limit at least one vehicle operating parameter, such as engine speed and/or engine load, in order to limit the corresponding noise emission. Unfortunately, such a method is not entirely satisfactory, due to the fact that it is not optimized Indeed such method will limit at least one of the vehicle's functionalities (in this case its ability to move swiftly), in such a way which may be not commensurate to the global result achieved in terms of overall vehicle noise reduction. An objective of the invention is therefore to provide a method and a system for implementing vehicle noise limitation which does not too severely or unnecessarily limit the vehicle's functionalities.

WO 01/08028 discloses a system where an auxiliary noise is adjusted to lie below the global overall noise in the vehicle cabin. WO 02/48529 discloses a method and a system according to the preamble of claim 1 for controlling a load of a vehicle in order to reduce its noise emissions and where an operating variable is controlled by means of a control unit as a function of a noise level of the vehicle.

Summary of the invention

In view of the above mentioned objectives, the invention provides for a method for implementing vehicle noise limitation in a vehicle as defined in claim 7.

The invention also provides for a system for implementing such a vehicle noise limitation method as defined in claim 1.

In other words, the invention provides for a system and a method implemented to "hide" a vehicle's mechanical noise "behind" the vehicle's rolling noise, at least within certain limits and for some operating modes of the vehicle. Therefore, if the rolling noise becomes higher, for example when rolling on a stone-paved road, it will be possible to release the operating constraints on the sources of the mechanical noise.

The invention provides for a system for implementing vehicle noise limitation wherein said system controls at least one vehicle operational parameter to limit the vehicle's mechanical noise emission as perceived outside of the vehicle, characterized in that it comprises:

- a system for estimating a rolling noise representative value, representative of the vehicle's rolling noise emission as perceived outside of the vehicle,
- (7) a system for setting a maximum mechanical noise representative value, derived from said rolling representative noise value;
- possibly, a system for defining a control strategy for said at least one vehicle operational parameter, derived from said maximum mechanical noise representative value, in order to limit the vehicle's mechanical noise emission.

Description of figures

Figure 1 is a very schematic top view of a truck with, represented on its side, a corresponding electronic architecture.

Figure 2 is a very schematic side view of the truck of Figure 1

Description of the invention

The invention will be hereinafter described in its application on a road vehicle such as a truck.

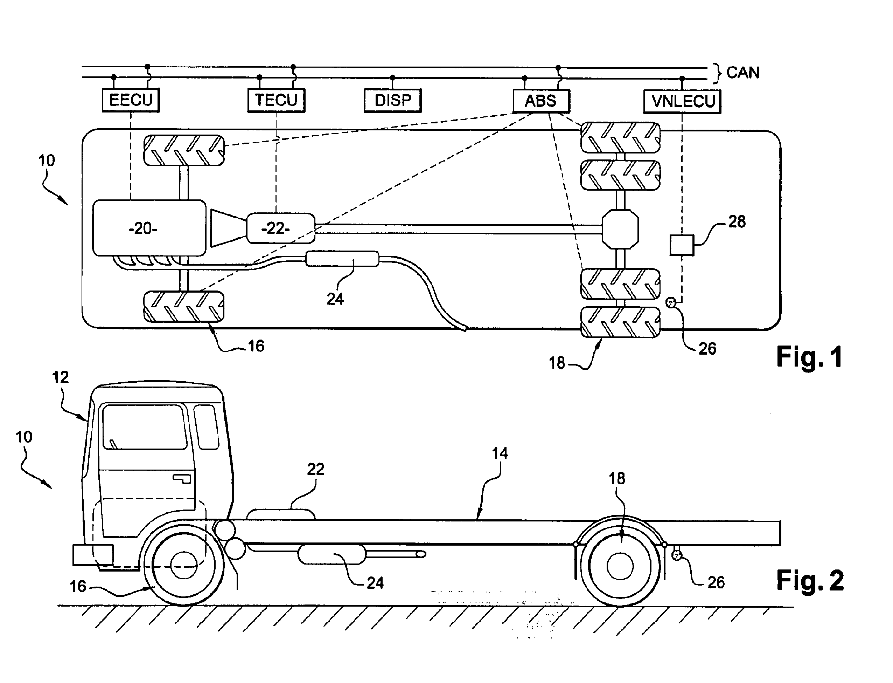

On Figure 1 and 2 is shown very schematically a truck 10 comprising a cabin 12 mounted on a chassis 14 having a front axle 16 and a rear axle 18. The truck 10 is driven by an engine 20 via a gearbox transmission 22. The truck has an electronic architecture comprising at least one electronic control unit (ECU) which controls at least one operating parameter of the truck. For example, as shown on Figure 1, the truck may have an engine electronic control unit EECU which controls the operation of the engine 20 as a function of many variables, including for example the position of the throttle pedal which the driver of the truck uses to control vehicle acceleration. The same control unit, or a dedicated control unit TECU, can for example control the gearbox, especially in the case where it is an automatic gearbox or an automated mechanical gearbox. The gearbox control unit TECU preferably communicates with the engine control unit EECU so as to exchange operational parameters information or even so that one element can send operating instructions to the other. A display ECU (DISP) controls a display device which is used to inform the driver on the vehicle operation. Other vehicle features and systems (such as exhaust systems 24, pneumatic systems, brake systems (ABS), auxiliary devices, etc...) may also have their own control unit or use one or several shared control units. Preferably, each of these units will be linked to the same communication network so as to be able to share at least some information about the operational status of the other features, and possibly to control at least partly some of these other features. Such a communication network can comprise a multiplexed communication bus, such as a CAN-bus as shown on Figure 1.

On a road vehicle, one particular example of the inventive method can be to optimize the global vehicle emitted noise by keeping the mechanical noise "below" the rolling noise as much as possible, so that the rolling noise supersedes the mechanical noise, at least in terms of how each noise is perceived by a person outside the vehicle, and at least within certain operating limits. The order of magnitude of the difference needed for a significant masking effect is about 0 to 3 dB(A), preferably at least 2 dB(A), between the rolling noise and the mechanical noise. Preferably, the method is not implemented on the lower vehicle speed range in order not to compromise the vehicle's ability to start and accelerate. In this speed range, the mechanical noise may therefore still be preponderant. As soon as the vehicle speed increases, the rolling noise increases fast and can rapidly overpass the mechanical noise if a correct control strategy is chosen for certain operating parameters. The speed at which this happens depends on the road surface, the noisier the road surface, the earlier the masking. From this perspective, the invention teaches to use the rolling noise to govern the overall vehicle noise perception by masking the mechanical noise as soon as possible and still maintaining optimized vehicle agility. In this particular case, it involves checking the respective levels of the mechanical noise and of the rolling noise, thereby taking into account the effect of road surface, and acting on engine/transmission management parameters to mask the mechanical noise by the rolling noise.

According to the invention, the method thus involves the step of estimating the rolling noise, and then the step of defining a control strategy to limit the mechanical noise so that, for a given operational status of the vehicle, the perceived rolling noise supersedes the perceived mechanical noise.

A given noise can be represented by different values. For example a given noise can be represented by its sound power level expressed in dB(A), or by its sound pressure level expressed in dB(A) as measured at a certain distance from the noise source (knowing that a noise source will often be in fact a combination of different noise sources). From this measurement, it can be determined the corresponding sound power level of the noise source. In this application, we will be more precisely interested in the exterior noise, that is the noise as perceived outside of the vehicle. Other options could have been chosen as the representative value, depending on which exact result is aimed at when implementing the method. For example the noise representative value could be a sound power level over a certain bandwidth, a sound power level expressed in linear decibel dBL (not compensated by human ear sensitivity), a sound pressure, a sound pressure level, a sound intensity, etc.... The choice of the representative values will preferably be the same for the two noises to be compared.

There are various ways to estimate a noise representative value. A first way is to calculate that value from a certain number of input parameters, using a formula, a mathematical model, an empirical model, and/or by retrieving said value (or at least one or several parameters for calculating said value) from a pre-established database.

When it comes to estimating a representative value for the rolling noise of a road vehicle, it is known that the rolling noise depends heavily, for a given vehicle, on the vehicle speed and the road noisiness. Of course, vehicle speed is a very accessible vehicle parameter. On the other hand, road noisiness depends of course on the road on which the vehicle is actually rolling. All in all, empirical studies have shown that the sound power level LwR of a vehicle's rolling noise can be approximately defined by the following formula:

$$LwR = (a+a') \times \log(v) + b + b'$$

where v is the vehicle speed, where a and b are parameters linked to the road, and a' and b' parameters linked to the vehicle. Therefore, road noisiness could be defined through a set of characteristic values, namely by the two parameters a and b, or, in a simpler approximation, by the parameter a.

Road noisiness could for example be derived from a geographical database where at least a number of road locations would be stored together with associated road noisiness. Therefore, knowing the instant location of the vehicle, for example from a GPS receiver on-board the vehicle, (or the location of the vehicle at a given time in the future), the corresponding noisiness of the road can be retrieved from the database. The corresponding road noisiness can then be input in a model/formula (preferably specific to the vehicle) to calculate a rolling noise representative value (for example using a formula of the kind above). The database could be on-board the vehicle or off-board.

If it would be off-board the vehicle, then it would be desirable for the vehicle to be equipped with a remote communication means (radio, satellite, GSM, GPRS, UMTS, WiMax etc..) so that an on-board control unit can retrieve the dataset from the off-board database. For example the database could be stored on a server in a back-office.

In another implementation, the road noisiness could be retrieved from an off-board infrastructure via a communication system, such a system using radio-frequency transmitters. As an example, it could be provided that, on a certain area, or along a certain road, road-side transmitters would be able to communicate to a passing-by vehicle the road noisiness for the road segment ahead. For example, such a transmitter could be installed at each location where a change of the road surface occurs. In such a case, the communication system between the vehicle and the infrastructure could be short-range, rather than long-range.

Nevertheless, given the numerous parameters which can influence the rolling noise emission of a vehicle, it can in some cases be preferable and relatively easier and more reliable to derive the rolling noise from a measured value. Such measure can involve a direct noise measurement, or an indirect measurement. In the former case, a microphone can be installed in an appropriate location on the vehicle (preferably near a wheel, most preferably one of the wheels furthest from other vehicle noise sources, especially furthest from the engine and from the exhaust line) . Of course, the measured noise will certainly need to be filtered to be a good representative of the rolling noise. Such filtering will preferably strive to substantially eliminate the mechanical noise from the measured noise, and possibly also the aerodynamic noise (although the aerodynamic noise can also be kept with the noise signal, so that it is then accounted for together with the rolling noise as a masking noise for the mechanical noise) .

It is also possible to measure rolling noise indirectly by measuring the vibrations on a vehicle component, preferably on or near the wheel, i.e. as near as possible to the road/wheel interface. From such vibration measurement, models/formulas can be established to retrieve a good approximation of the rolling noise. The system to implement such method could then comprise a sensor such as an accelerometer to measure the vibration.

Of course, a same vehicle could be equipped with several systems to estimate the rolling noise according to one or the other of the methods above. Those different means could then be used either separately, for example depending on the vehicle operating parameters, or in conjunction one with another in order to get a more accurate estimation of the rolling noise.

In any case, the methods and systems described above will make it possible to define a noise reference corresponding to the instant noise emitted by the rolling noise sources, reference to which will be compared the noise emitted by the mechanical noise source. Preferably, the noise reference will refer to how the noise will be perceived by an individual.

According to the invention, the method comprises the step of defining a control strategy for said at least one vehicle operational parameter, derived from the rolling noise representative value, in order to limit the noise level emitted by the mechanical noise source so that a corresponding perceived noise from the rolling noise source supersedes the corresponding perceived noise from the mechanical noise source. Therefore, the noise limitation for the mechanical noise source will vary according to the estimated rolling noise representative value.

The second noise source is the mechanical noise source, which, as explained above, can comprise several noise sources. In such a case, numerous vehicle operational parameters will have an influence on the mechanical noise, such as engine maximum rotating speed, the engaged gearbox ratio, the maximum engine load, the status of an exhaust braking system, the status of a pneumatic compressor, the rotation speed of a cooling fan, etc... By appropriately controlling any one of these parameters, it is possible to limit the mechanical noise.

An appropriate control strategy can therefore be defined for one of these parameters, or for several of these parameters. Such a control strategy can be very simplistic (setting a lowered maximum revolving speed for the engine, and/or forbidding the use of an air- conditioning compressor, etc...) or it can be more refined, taking into account several parameters and several scenarios, and/or using several thresholds for smooth transitions between various operating modes. For example, such a strategy can be defined using a relationship between the various values of the controlled operating parameter (s) , and the corresponding mechanical noise emitted by the vehicle. Such a relationship can use a mathematical model/ formula or a database, and can derive from theoretical calculations or from empirical evaluation. The relationship can also involve a direct or indirect instantaneous measurement of the mechanical noise, and the control strategy can then comprise a negative feedback control loop.

As stated above, the control strategy will derive from the rolling noise representative value and will be defined so that, for a given status of the vehicle, a corresponding perceived rolling noise supersedes the corresponding perceived mechanical noise.

In order to define the control strategy, it is possible to set a maximum value for the mechanical noise, said maximum value deriving from the rolling noise representative value, and then to define the control strategy so that the mechanical noise does not exceed the maximum value, or at least that the mechanical value does not exceed too much or for a too long time that maximum value (which is then a maximum desirable value and not a maximum imperative value), or at least tends towards that value.

The control strategy can for example involve setting a maximum value for one or several operating parameters, and/or an optimal value or range of values for the control parameter(s). It can also comprise a status value for a particular system of the vehicle.

Once this control strategy is defined, various options arise, as to how the strategy is implemented. First of all, the control strategy can be simply communicated to the driver, for example through an audio device, through some kind of display device, or through some kind of haptic technology, such as creating a "hardening point" on the travel of an accelerator pedal so that the driver can feel an increased resistance from some point, indicating that he should not press the pedal further, without totally hindering him from going any further. It is then mostly up to the driver to implement the control strategy, by following the corresponding information. Such implementation can be used to indicate to the driver a maximum recommended speed, to indicate a recommended gearbox ratio, to recommend the activation or the deactivation of a particular device of the vehicle, such as an air-conditioning apparatus. Such an implementation has the advantage of being quite simple, and therefore relatively cheap, and more importantly to let to the driver the final decision on whether or not to implement the control strategy. Indeed, for example if the control strategy involves setting a maximum vehicle speed, it can in some particular cases be dangerous if the driver cannot override at least temporarily the maximum speed. In some cases, only the driver can take the right decision based on his experience and his apprehension of the real situation.

On a more elaborate vehicle, the control strategy can be implemented automatically by the vehicle's systems or will be at least taken automatically into account by the vehicle's systems. For example, an engine ECU can automatically implement a reduced engine speed maximum value. In the case of an automatic gearbox, a gearbox ECU can modify its ratio changing control laws so that a higher ratio can be engaged at a lower engine speed than it would under normal operating conditions. Of course numerous other examples could be listed. The advantages of an automatic implementation can include a stricter implementation of the method, less workload for the driver who can therefore concentrate on other tasks, and therefore the possibility to implement more complex strategies which will achieve a better optimization of the balance between overall noise reduction and vehicle functionality limitation.

It is also conceivable that the control strategy will be in part automatically implemented, while certain aspects of the control strategy, for example linked to the operating parameters most crucial for the safety of the driver, of the vehicle and of their environment, will only be given as information to the driver, letting it up to him to follow the corresponding indications if possible.

Depending on the vehicle specification and use, it can be desirable that the method be implemented continuously (for example several times per minute or per second), from time to time (for example every minute or every ten minutes) or only upon arising of a particular triggering event. Such a triggering event can be for example the detection of a substantial difference in road noisiness, or the detection of communication signal from an off-board communication means indicating a new road noisiness representative value, or the entrance into a zone with different environmental regulations.

It has been discussed above that the method can use an off-board database. But even in such a case, it can be considered that the method is essentially carried out on-board of the vehicle, the vehicle being then equipped with means for implementing the steps of the method. Conversely, the method can also be carried out essentially off-board of the vehicle. Indeed, a back-office can be equipped with the means to estimate the rolling noise of a vehicle, based on its location and its characteristics, and with means to define a control strategy adapted to that vehicle to implement the noise limitation. The vehicle and the back-office need then simply to be equipped with corresponding communicating means so that, as an example, the vehicle can send to the back-office its current position (retrieved using a global position system) and can receive from the back-office a corresponding control strategy which will be implemented on-board the vehicle.

On Figure 1, is shown very schematically a system for implementing one embodiment of the method above. This system is based on an electronic control unit VNLECU dedicated to vehicle noise limitation, which is connected to the CAN-bus. As any current ECU, the VNLECU may comprise a microprocessor which can process the inputs coming directly from various sensors or coming from the CAN-bus through corresponding ports, in real time. It is used to control the operation of certain vehicle subsystems, and/or to send itself some information to other components, for example through the CAN-bus, through corresponding ports. An electronic control unit contains both hardware and software. The hardware consists of electronic components on a printed circuit board (PCB). The main component on this circuit board is a microcontroller chip (CPU). The software is stored in the microcontroller or other chips on the PCB, typically in EPROMs or flash memory, so that the CPU can be reprogrammed by uploading updated code. The VNLECU may comprise various subunits. These subunits can be physically separated, with for example several CPUs, or these subunits can be only of a logical type, that is in the form of different software parts running on the same CPU and using the same memory components.

This system comprises a microphone 26 which, as shown on Figure 1, is located near a wheel of the rear axle 18, and which, through a dedicated controller 28, is able to deliver a signal corresponding to the measured sound power level of the rolling noise. This signal can be directly input in the VNLECU. The VNLECU is equipped with software and data to derive, from said measured rolling noise sound power level, a maximum desirable engine speed which ensures that the rolling noise will supersede the corresponding mechanical noise. This maximum engine speed is sent on the CAN-bus by the VNLECU so that it can be retrieved by the engine ECU, by the transmission ECU, and/or by the display ECU so that this maximum desirable engine speed is taken into account by the EECU (to limit engine speed by controlling fuel injection), and/or by the TECU (to control an earlier up-shift of the gearbox) and/or by the display ECU DISP to display this information to the driver for him to take appropriate action if possible.

## Claims

1. System for implementing vehicle noise limitation wherein said system controls at least one vehicle operational parameter to limit the vehicle's mechanical noise emission, as perceived outside of the vehicle, **characterized in that** it comprises:

   - means estimating a rolling noise representative value, representative of the vehicle's rolling noise emission as perceived outside of the vehicle;
   - means (VNLECU, EECU, TECU, DISP), comprising at least one electronic control unit, defining a control strategy by setting a maximum value, an optimal value or a range of values for said at least one vehicle operational parameter and that is derived from said rolling noise representative value, in order to limit the vehicle's mechanical noise emission so that the perceived noise from the vehicle's rolling noise emission supersedes the perceived noise from the vehicle's mechanical noise emission.

2. System according to claim 1, **characterized in that** the means estimating a rolling noise representative value comprise a microphone (26).

3. System according to claim 1, **characterized in that** the means estimating a rolling noise representative value comprise a vibration sensor such as an accelerometer.

4. System according to claim 1, **characterized in that** the means estimating a rolling noise representative value comprise means for retrieving a noisiness characteristic value for the rolling surface on which the vehicle rolls.

5. System according to claim 4, **characterized in that** the means for retrieving a noisiness characteristic value for the rolling surface on which the vehicle rolls comprise an off-board or on-board database.

6. system according to claims 4 or 5, **characterized in that** the means for retrieving a noisiness characteristic value for the rolling surface on which the vehicle rolls comprise communication means.

7. Method using the system as defined in claim 1 for implementing vehicle noise limitation in a vehicle having a first noise source and a second noise source, wherein at least one vehicle operational parameter is controllable to limit the noise emission of at least the second noise source, **characterized in that** it involves the steps of:

    - estimating a first noise representative value, representative of the noise emitted by the first noise source, where said first noise representative value is representative of the vehicle rolling noise as perceived outside of the vehicle;
    - defining a control strategy for said at least one vehicle operational parameter, derived from said first noise representative value and which comprises setting a maximum value, an optimal value or a range of values for said at least one vehicle operating parameter, in order to limit the noise level emitted by the second noise source so that a corresponding perceived noise from the first noise source, as perceived outside of the vehicle, supersedes the corresponding perceived noise from the second noise source, where said second noise is the vehicle mechanical noise as perceived outside of the vehicle.

8. Method according to claim 7, **characterized in that** it comprises the intermediate step of setting a maximum value for a second noise representative value, representative of the noise emitted by a second noise source, said maximum value being derived from said first representative noise value, said maximum second noise representative value being set so that a corresponding perceived noise from the first noise source supersedes the corresponding perceived noise from the second noise source.

9. Method according to claims 7 or 8, **characterized in that** the step of estimating a first noise representative value comprises the step of measuring a first noise representative value.

10. Method according to claim 9, **characterized in that** the step of measuring a first noise representative value involves measuring a noise.

11. Method according to claim 9, **characterized in that** the step of measuring a first noise representative value involves measuring a vibration of at least one component attached to the vehicle.

12. Method according to claim 9, **characterized in that** the step of estimating a first noise representative value comprises the step of calculating a first noise representative value or retrieving such value from a database.

13. Method according to claim 12, **characterized in that** said database is on-board the vehicle.

14. Method according to claim 12, **characterized in that** said database is off-board the vehicle.

15. Method according to any of the preceding claims 7 to 14, **characterized in that** the step of estimating a first noise representative value comprises the step of retrieving a value from an off-board infrastructure via a communication means.

16. Method according to claim 8, **characterized in that** said maximum second noise representative value is set so that a corresponding perceived noise level from the first noise source exceeds the corresponding perceived noise level from the second noise source by at least 2 dB(A).

17. Method according to any of the preceding claims 7 to 16, **characterized in that** the step of defining a control strategy comprises using a pre-established data set or model representing the influence of said at least one operational parameter on the perceived noise level from the second noise source

18. Method according to any of the preceding claims 7 to 17, **characterized in that** said method comprises the further step of informing a vehicle driver of said control strategy.

19. Method according to any of the preceding claims 7 to 18, **characterized in that** said method comprises the further step of automatically controlling said vehicle operational parameter according to said control strategy or at least taking into account said control strategy.

20. Method according to any of the preceding claims 7 to 19, **characterized in that** said method is implemented only for certain operating modes of the vehicle.

21. Method according to any of the preceding claims 7 to 20, **characterized in that** said method is implemented only when the vehicle speed exceeds a certain threshold.

**22.** Method according to any of the preceding claims 7 to 21, **characterized in that** said method is performed continuously, or from time to time, or upon arising of a triggering event.

**23.** Method according to any of the preceding claims 7 to 22, **characterized, in that** the method is performed at least partly off board the vehicle.

**24.** Method according to claim any of the preceding claims 7 to 23, **characterized in that** said rolling noise representative value is dependent on a characteristic of a rolling surface on which the vehicle rolls.

**25.** Method according to claim any of the preceding claims 7 to 24, combined to claim 10, **characterized in that** a noise is measured proximate a wheel of the vehicle.

**26.** Method according to claim any of the preceding claims 7 to 25, combined to claim 11, **characterized in that** the said component is proximate a wheel of the vehicle.

**27.** Method according to any of the preceding claims 7 to 26, **characterized in that** the method comprises the step of retrieving a noisiness characteristic value for the rolling surface on which the vehicle rolls.

**28.** Method according to claim 27, **characterized in that** the noisiness characteristic value is retrieved from a database based on the geographical location of the vehicle.

**Patentansprüche**

**1.** System zur Implementierung einer Fahrzeuggeräuschbegrenzung, wobei das System wenigstens einen Fahrzeugbetriebsparameter steuert, um die mechanische Geräuschemission des Fahrzeugs zu begrenzen, wie sie außerhalb des Fahrzeugs wahrgenommen wird, **dadurch gekennzeichnet, dass** es umfasst:

- Einrichtungen zum Schätzen eines Rollgeräuschrepräsentativwerts, der für die Rollgeräuschemission des Fahrzeugs repräsentativ ist, wie sie außerhalb des Fahrzeugs wahrgenommen wird,
- Einrichtungen (VNLECU, EECU, TECU, DISP), die wenigstens eine elektronische Steuereinheit umfassen, die eine Steuerstrategie durch Setzen eines Maximalwerts, eines optimalen Werts oder eines Bereiches von Werten für den wenigstens einen Fahrzeugbetriebsparameter definiert, die von einem Rollgeräuschrepräsentativwert abgeleitet wird, um die mechanische Geräuschemission des Fahrzeugs so zu begrenzen, dass das von der Rollgeräuschemission des Fahrzeugs wahrgenommene Geräusch an die Stelle des Geräusches tritt, das von der mechanischen Geräuschemission des Fahrzeugs wahrgenommen wird.

**2.** System nach Anspruch 1, **dadurch gekennzeichnet, dass** die Einrichtungen zum Schätzen eines Rollgeräuschrepräsentativwerts ein Mikrofon (26) umfassen.

**3.** System nach Anspruch 1, **dadurch gekennzeichnet, dass** die Einrichtungen zum Schätzen eines Rollgeräuschrepräsentativwerts einen Vibrationssensor, wie z. B. einen Beschleunigungsmesser, umfassen.

**4.** System nach Anspruch 1, **dadurch gekennzeichnet, dass** die Einrichtungen zum Schätzen eines Rollgeräuschrepräsentativwerts Einrichtungen zum Abfragen eines Geräuschkennwerts für die Rollfläche umfassen, auf der das Fahrzeug rollt.

**5.** System nach Anspruch 4, **dadurch gekennzeichnet, dass** die Einrichtungen zur Abfrage eines Geräuschkennwerts für die Rollfläche, auf der das Fahrzeug rollt, eine fahrzeugferne oder fahrzeugseitige Datenbank umfassen.

**6.** System nach Anspruch 4 oder 5, **dadurch gekennzeichnet, dass** die Einrichtungen zur Abfrage eines Geräuschkennwerts für die Rollfläche, auf der das Fahrzeug rollt, eine Kommunikationseinrichtung umfassen.

**7.** Verfahren, das das System nach Anspruch 1 zur Implementierung einer Fahrzeuggeräuschbegrenzung in einem Fahrzeug verwendet, das eine erste Geräuschquelle und eine zweite Geräuschquelle aufweist, wobei wenigstens ein Fahrzeugbetriebsparameter zur Begrenzung der Geräuschemission wenigstens der zweiten Geräuschquelle steuerbar ist, **dadurch gekennzeichnet, dass** es die Schritte beinhaltet:

- Schätzen eines ersten Geräuschrepräsentativwerts, der für das von der ersten Geräuschquelle emittierte Geräusch repräsentativ ist, wobei der erste Geräuschrepräsentativwert für das Fahrzeugrollgeräusch repräsentativ ist, wie es außerhalb des Fahrzeugs wahrgenommen wird,
- Definierung einer Steuerstrategie für den wenigstens einen Fahrzeugbetriebsparameter, die von dem ersten Geräuschrepräsentativwert abgeleitet wird und die das Setzen eines Maximalwerts, eines optimalen Werts oder eines Bereiches von Werten für den wenigstens einen Fahrzeugbetriebsparameter umfasst, um die Geräuschhöhe zu begrenzen, die von der zweiten Geräuschquelle emittiert wird, so dass ein entsprechendes wahrgenommenes Geräusch von der ersten Geräuschquelle, wie es außerhalb des Fahrzeugs wahrgenommen wird, an die Stelle des entsprechenden wahrgenommenen Geräusches von der zweiten Geräuschquelle tritt, wobei das zweite Geräusch das mechanische Geräusch des Fahrzeugs ist, wie es außerhalb das Fahrzeugs wahrgenommen wird.

8. Verfahren nach Anspruch 7, **dadurch gekennzeichnet, dass** es den Zwischenschritt umfasst, dass ein Maximalwert für einen zweiten Geräuschrepräsentativwert gesetzt wird, der für das Geräusch repräsentativ ist, das durch eine zweite Geräuschquelle emittiert wird, wobei der Maximalwert von dem ersten Repräsentativgeräuschwert abgeleitet wird, wobei der maximale zweite Geräuschrepräsentativwert so gesetzt wird, dass ein entsprechendes, von der ersten Geräuschquelle wahrgenommenes Geräusch an die Stelle des entsprechenden wahrgenommenen Geräusches von der zweiten Geräuschquelle tritt.

9. Verfahren nach Anspruch 7 oder 8, **dadurch gekennzeichnet, dass** der Schritt der Schätzung eines ersten Geräuschrepräsentativwerts den Schritt der Messung eines ersten Geräuschrepräsentativwerts umfasst.

10. Verfahren nach Anspruch 9, **dadurch gekennzeichnet, dass** der Schritt der Messung eines ersten Geräuschrepräsentativwerts das Messen eines Geräusches beinhaltet.

11. Verfahren nach Anspruch 9, **dadurch gekennzeichnet, dass** der Schritt der Messung eines ersten Geräuschrepräsentativwerts die Messung einer Vibration wenigstens einer an dem Fahrzeug angebrachten Komponente umfasst.

12. Verfahren nach Anspruch 9, **dadurch gekennzeichnet, dass** der Schritt der Schätzung eines ersten Geräuschrepräsentativwerts den Schritt der Berechnung eines ersten Geräuschrepräsentativwerts oder die Abfrage eines solchen Werts aus einer Datenbank umfasst.

13. Verfahren nach Anspruch 12, **dadurch gekennzeichnet, dass** die Datenbank fahrzeugseitig ist.

14. Verfahren nach Anspruch 12, **dadurch gekennzeichnet, dass** die Datenbank fahrzeugfern ist.

15. Verfahren nach irgendeinem der vorhergehenden Ansprüche 7 bis 14, **dadurch gekennzeichnet, dass** der Schritt des Schätzens des ersten Geräuschrepräsentativwerts den Schritt der Abfrage eines Werts von einer fahrzeugfernen Infrastruktur über eine Kommunikationseinrichtung umfasst.

16. Verfahren nach Anspruch 8, **dadurch gekennzeichnet, dass** der maximale zweite Geräuschrepräsentativwert so gesetzt wird, dass eine entsprechende von der ersten Geräuschquelle wahrgenommene Geräuschhöhe die entsprechende von der zweiten Geräuschquelle wahrgenommene Geräuschhöhe um wenigstens 2 dB(A) überschreitet.

17. Verfahren nach irgendeinem der vorhergehenden Ansprüche 7 bis 16, **dadurch gekennzeichnet, dass** der Schritt der Definierung einer Steuerstrategie die Verwendung eines zuvor hergestellten Datensatzes oder Modells umfasst, der bzw. das den Einfluss des wenigstens einen Betriebsparameters auf die wahrgenommene Geräuschhöhe von der zweiten Geräuschquelle repräsentiert.

18. Verfahren nach irgendeinem der vorhergehenden Ansprüche 7 bis 17, **dadurch gekennzeichnet, dass** das Verfahren den weiteren Schritt der Informierung eines Fahrzeugführers von der Steuerstrategie umfasst.

19. Verfahren nach irgendeinem der vorhergehenden Ansprüche 7 bis 18, **dadurch gekennzeichnet, dass** das Verfahren den weiteren Schritt der automatischen Steuerung des Fahrzeugbetriebsparameters gemäß der Steuerstrategie oder wenigstens die Berücksichtigung der Steuerstrategie umfasst.

20. Verfahren nach irgendeinem der vorhergehenden Ansprüche 7 bis 19, **dadurch gekennzeichnet, dass** das Verfahren nur für bestimmte Betriebsmodi des Fahrzeugs implementiert wird.

21. Verfahren nach irgendeinem der vorhergehenden Ansprüche 7 bis 20, **dadurch gekennzeichnet, dass** das Verfahren nur implementiert wird, wenn die Fahrzeuggeschwindigkeit eine bestimmte Schwelle überschreitet.

22. Verfahren nach irgendeinem der vorhergehenden Ansprüche 7 bis 21, **dadurch gekennzeichnet, dass** das Verfahren fortlaufend, von Zeit zu Zeit, oder bei Auftreten eines auslösenden Ereignisses durchgeführt wird.

23. Verfahren nach irgendeinem der vorhergehenden Ansprüche 7 bis 22, **dadurch gekennzeichnet, dass** das Verfahren wenigstens teilweise fahrzeugfern durchgeführt wird.

**24.** Verfahren nach irgendeinem der vorhergehenden Ansprüche 7 bis 23, **dadurch gekennzeichnet, dass** der Rollgeräuschrepräsentativwert von einer Eigenschaft einer Rollfläche abhängig ist, auf der das Fahrzeug rollt.

**25.** Verfahren nach irgendeinem der vorhergehenden Ansprüche 7 bis 24, kombiniert mit Anspruch 10, **dadurch gekennzeichnet, dass** ein Geräusch in der Nähe eines Rads des Fahrzeugs gemessen wird.

**26.** Verfahren nach irgendeinem der vorhergehenden Ansprüche 7 bis 25, in Kombination mit Anspruch 11, **dadurch gekennzeichnet, dass** die Komponente sich in der Nähe eines Rads eines Fahrzeugs befindet.

**27.** Verfahren nach irgendeinem der vorhergehenden Ansprüche 7 bis 26, **dadurch gekennzeichnet, dass** das Verfahren den Schritt der Abfrage eines Geräuschkennwerts für die Rollfläche umfasst, auf der das Fahrzeug rollt.

**28.** Verfahren nach Anspruch 27, **dadurch gekennzeichnet, dass** der Geräuschkennwert von einer Datenbank auf der Basis des geografischen Ortes des Fahrzeugs abgefragt wird.

## Revendications

**1.** Système pour mettre en oeuvre une limitation des bruits d'un véhicule, lequel système régule au moins un paramètre de fonctionnement du véhicule pour limiter l'émission de bruit mécanique du véhicule perçue à l'extérieur du véhicule, **caractérisé en ce qu'**il comprend :

- un moyen estimant une valeur représentative du bruit de roulement, représentant l'émission de bruit de roulement du véhicule perçue à l'extérieur du véhicule ;
- un moyen (VNLECU, EECU, TECU, DISP), comprenant au moins une unité de régulation électronique, définissant une stratégie de régulation en fixant une valeur maximale, une valeur optimale ou une plage de valeurs dudit au moins un paramètre de fonctionnement du véhicule et qui est déduite de ladite valeur représentative du bruit de roulement, dans le but de limiter l'émission de bruit mécanique du véhicule de manière à ce que le bruit perçu émanant de l'émission de bruit de roulement du véhicule surpasse le bruit perçu émanant de l'émission de bruit mécanique du véhicule.

**2.** Système selon la revendication 1, **caractérisé en ce que** le moyen estimant une valeur représentative du bruit de roulement comprend un microphone (26).

**3.** Système selon la revendication 1, **caractérisé en ce que** le moyen estimant une valeur représentative du bruit de roulement comprend un capteur de vibrations tel qu'un accéléromètre.

**4.** Système selon la revendication 1, **caractérisé en ce que** le moyen estimant une valeur représentative du bruit de roulement comprend un moyen pour extraire une valeur caractéristique de bruyance de la surface de roulement sur laquelle roule le véhicule.

**5.** Système selon la revendication 4, **caractérisé en ce que** le moyen pour extraire une valeur caractéristique de bruyance de la surface de roulement sur laquelle roule le véhicule comprend une base de données externe ou embarquée.

**6.** Système selon la revendication 4 ou 5, **caractérisé en ce que** le moyen pour extraire une valeur caractéristique de bruyance de la surface de roulement sur laquelle roule le véhicule comprend un moyen de communication.

**7.** Procédé utilisant le système selon la revendication 1 pour mettre en oeuvre une limitation des bruits d'un véhicule comportant une source d'un premier bruit et une source d'un deuxième bruit, dans lequel au moins un paramètre de fonctionnement du véhicule est susceptible d'être régulé pour limiter l'émission de bruit au moins de la source du deuxième bruit, **caractérisé en ce qu'**il comprend les étapes consistant à :

- estimer une valeur représentative d'un premier bruit, représentant le bruit émis par la source du premier bruit, ladite valeur représentative du premier bruit représente le bruit de roulement du véhicule perçu à l'extérieur du véhicule ;
- définir une stratégie de régulation pour ledit au moins un paramètre de fonctionnement du véhicule, déduite de ladite valeur représentative du premier bruit et consistant à fixer une valeur maximale, une valeur optimale ou une plage de valeurs dudit au moins un paramètre de fonctionnement du véhicule, dans le but de limiter le niveau de bruit émis par la source du deuxième bruit de manière à ce qu'un bruit perçu correspondant émanant de la source du premier bruit, perçu à l'extérieur du véhicule, surpasse le bruit perçu correspondant émanant de la source du deuxième bruit, le deuxième bruit représentant le bruit mécanique du véhicule perçu à l'extérieur du véhicule.

**8.** Procédé selon la revendication 7, **caractérisé en ce qu'**il comprend l'étape intermédiaire consistant à fixer une valeur maximale d'une valeur représentative d'un deuxième bruit, représentant le bruit émis par une source d'un deuxième bruit, ladite valeur maximale étant déduite de ladite valeur représentative du premier bruit, ladite valeur maximale de la valeur représentative du deuxième bruit étant fixée de manière à ce qu'un bruit perçu correspondant émanant de la source du premier bruit surpasse le bruit perçu correspondant émanant de la source du deuxième bruit.

9. Procédé selon les revendications 7 ou 8, **caractérisé en ce que** l'étape consistant à estimer une valeur représentative d'un premier bruit comprend l'étape consistant à mesurer une valeur représentative d'un premier bruit.

10. Procédé selon la revendication 9, **caractérisé en ce que** l'étape consistant à mesurer une valeur représentative d'un premier bruit consiste à mesurer un bruit.

11. Procédé selon la revendication 9, **caractérisé en ce que** l'étape consistant à mesurer une valeur représentative d'un premier bruit consiste à mesurer une vibration d'au moins un composant attaché au véhicule.

12. Procédé selon la revendication 9, **caractérisé en ce que** l'étape consistant à estimer une valeur représentative d'un premier bruit comprend l'étape consistant à calculer une valeur représentative d'un premier bruit ou à extraire cette valeur d'une base de données.

13. Procédé selon la revendication 12, **caractérisé en ce que** ladite base de données est embarquée sur le véhicule.

14. Procédé selon la revendication 12, **caractérisé en ce que** ladite base de données est externe au véhicule.

15. Procédé selon l'une quelconque des revendications 7 à 14 précédentes, **caractérisé en ce que** l'étape consistant à estimer une valeur représentative d'un premier bruit comprend l'étape consistant à extraire une valeur d'une infrastructure externe par le biais d'un moyen de communication.

16. Procédé selon la revendication 8, **caractérisé en ce que** ladite valeur maximale de la valeur représentative du deuxième bruit est fixée de manière à ce qu'un niveau de bruit perçu correspondant émanant de la source du premier bruit dépasse d'au moins 2 dB(A) le niveau de bruit perçu correspondant émanant de la source du deuxième bruit.

17. Procédé selon l'une quelconque des revendications 7 à 16 précédentes, **caractérisé en ce que** l'étape consistant à définir une stratégie de régulation consiste à utiliser un jeu de données ou un modèle préétabli représentant l'influence dudit au moins un paramètre de fonctionnement sur le niveau de bruit perçu émanant de la source du deuxième bruit.

18. Procédé selon l'une quelconque des revendications 7 à 17 précédentes, **caractérisé en ce qu'**il comprend l'étape supplémentaire consistant à informer un conducteur du véhicule de ladite stratégie de régulation.

19. Procédé selon l'une quelconque des revendications 7 à 18 précédentes, **caractérisé en ce qu'**il comprend l'étape supplémentaire consistant à réguler automatiquement ledit paramètre de fonctionnement du véhicule conformément à ladite stratégie de régulation ou en tenant au moins compte de ladite stratégie de régulation.

20. Procédé selon l'une quelconque des revendications 7 à 19 précédentes, **caractérisé en ce qu'**il est mis en oeuvre uniquement pour certains modes de fonctionnement du véhicule.

21. Procédé selon l'une quelconque des revendications 7 à 20 précédentes, **caractérisé en ce qu'**il est mis en oeuvre uniquement si la vitesse du véhicule dépasse un certain seuil.

22. Procédé selon l'une quelconque des revendications 7 à 21 précédentes, **caractérisé en ce qu'**il est mis en oeuvre de façon continue, ou de temps à autre, ou si survient un événement déclencheur.

23. Procédé selon l'une quelconque des revendications 7 à 22 précédentes, **caractérisé en ce qu'**il est mis en oeuvre au moins partiellement de façon externe au véhicule.

24. Procédé selon l'une quelconque des revendications 7 à 23 précédentes, **caractérisé en ce que** ladite valeur représentative du bruit de roulement est fonction d'une caractéristique d'une surface de roulement sur laquelle roule le véhicule.

25. Procédé selon l'une quelconque des revendications 7 à 24 précédentes en association avec la revendication 10, **caractérisé en ce qu'**un bruit est mesuré à proximité d'une roue du véhicule.

26. Procédé selon l'une quelconque des revendications 7 à 25 précédentes en association avec la revendication 11, **caractérisé en ce que** ledit composant est à proximité d'une roue du véhicule.

**27.** Procédé selon l'une quelconque des revendications 7 à 26 précédentes, **caractérisé en ce qu'**il comprend l'étape consistant à extraire une valeur caractéristique de bruyance de la surface de roulement sur laquelle roule le véhicule.

**28.** Procédé selon la revendication 27, **caractérisé en ce que** la valeur caractéristique de bruyance est extraite d'une base de données basée sur l'emplacement géographique du véhicule.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0108028 A

- WO 0248529 A